(19) Europäisches Patentamt
European Patent Office
Office européen des brevets

(11) EP 2 957 588 A1

(12) **EUROPEAN PATENT APPLICATION**
published in accordance with Art. 153(4) EPC

(43) Date of publication:
**23.12.2015 Bulletin 2015/52**

(21) Application number: **14751364.2**

(22) Date of filing: **31.01.2014**

(51) Int Cl.:
***C08J 5/22*** *(2006.01)* ***C08F 220/60*** *(2006.01)*
*B01D 53/22 (2006.01)* *B01D 61/00 (2006.01)*
*B01D 61/02 (2006.01)* *B01D 61/42 (2006.01)*
*B01D 69/02 (2006.01)* *B01D 69/10 (2006.01)*
*C08F 222/38 (2006.01)*

(86) International application number:
**PCT/JP2014/052295**

(87) International publication number:
**WO 2014/125942 (21.08.2014 Gazette 2014/34)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **15.02.2013 JP 2013027795**
**30.08.2013 JP 2013179800**

(71) Applicant: **FUJI-FILM Corporation**
**Minato-ku**
**Tokyo 106-8620 (JP)**

(72) Inventors:
- **TAKAMOTO, Tetsufumi**
  **Ashigarakami-gun**
  **Kanagawa 258-8577 (JP)**
- **KODAMA, Keisuke**
  **Ashigarakami-gun**
  **Kanagawa 258-8577 (JP)**
- **YAMADA, Wakana**
  **Ashigarakami-gun**
  **Kanagawa 258-8577 (JP)**
- **KAMINAGA, Kuniyuki**
  **Ashigarakami-gun**
  **Kanagawa 258-8577 (JP)**

(74) Representative: **Hoffmann Eitle**
**Patent- und Rechtsanwälte PartmbB**
**Arabellastraße 30**
**81925 München (DE)**

(54) **POLYMER FUNCTIONAL FILM AND METHOD FOR PRODUCING SAME**

(57) The present invention provide a polymer functional film having a structure represented by the following Formula (I) and having a water content of 20% by mass to 50% by mass, and a method for producing the same:

EP 2 957 588 A1

Formula (I)

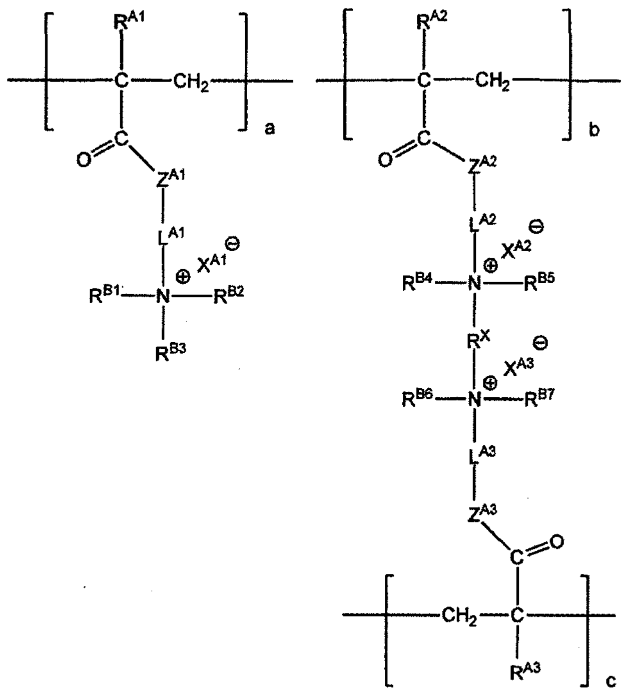

**Description**

## BACKGROUND OF THE INVENTION

1. Field of the Invention

The present invention relates to a polymer functional film which is useful as an ion exchange membrane, a reverse osmosis membrane, a forward osmosis membrane, a gas separation membrane or the like, and a method for producing the same.

2. Description of the Related Art

Regarding membranes having various functions as polymer functional film, an ion exchange membrane, a reverse osmosis membrane, a forward osmosis membrane, a gas separation membrane and the like are known.
For example, an ion exchange membrane is used in electrodeionization (EDI), continuous electrodeionization (CEDI), electrodialysis (ED), electrodialysis reversal (EDR), and the like.
Electrodeionization (EDI) is a water treatment process for removing ions from an aqueous liquid using a thin membrane and electric potential in order to achieve ion transport. Unlike other water purification technologies such as conventional ion exchange, electrodeionization can be used to produce ultrapure water without requiring the use of chemical agents such as acids or caustic soda. Electrodialysis (ED) and electrodialysis reversal (EDR) are electrochemical separation processes of removing ions and the like from water and other fluids.
In regard to ion exchange membranes, research is being conducted on the improvements in selective permeability and pH-resistance (see, for example, WO2011/073637A; WO2011/073638A; WO2011/025867A; and WO2013/011273A). However, there is a demand for further enhancement of performance as polymer functional films, and thus, enhancements of other characteristics of polymer functional films have also been required.

## SUMMARY OF THE INVENTION

According to the research conducted by the inventors of the present invention, it was found that in order to broaden the range of use of a film as a polymer functional film, it is important to increase the selective permeability of conventional polymer functional films, and to further decrease the coefficient of water permeability.
It is an object of the invention to provide a polymer functional film which has excellent ability to control the coeffcient of water permeability and excellent selective permeability for ions and can be used in a wide variety of applications, and a method for producing the polymer functional film.
In view of the object described above, the present inventors conducted a thorough investigation on a polymerizable compound suitable for a polymer functional film. As a result, the inventors found that a polymer functional film having a structure represented by the following Formula (I) not only exhibits satisfactory selective permeability for ions, but also exhibits a satisfactorily low coefficient when used as an ion exchange membrane. The invention has been achieved based on these findings.
Specifically, the object of the invention described above is achieved by means described below.

<1> A polymer functional film having a structure represented by the following Formula (I) and having a water content of from 20% by mass to 50% by mass:

Formula (I)

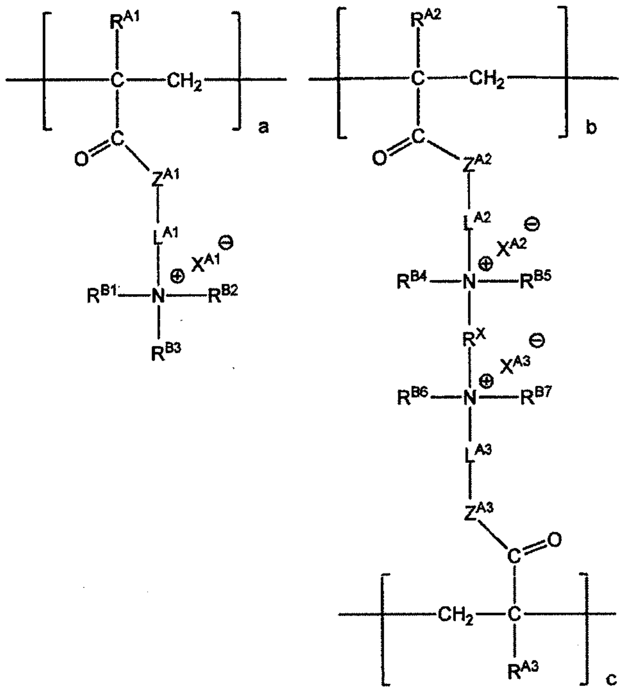

wherein in Formula (I), $R^{A1}$ to $R^{A3}$ each independently represent a hydrogen atom or an alkyl group; $R^{B1}$ to $R^{B7}$ each independently represent an alkyl group or an aryl group; $Z^{A1}$ to $Z^{A3}$ each independently represent -O- or -NRa-, wherein Ra represents a hydrogen atom or an alkyl group; $L^{A1}$ to $L^{A3}$ each independently represent an alkylene group; $R^X$ represents an alkylene group, an alkenylene group, an alkynylene group, an arylene group, -O-, or a divalent linking group of a combination thereof; $X^{A1}$ to $X^{A3}$ each independently represent a halogen ion or an aliphatic or aromatic carboxylic acid ion; a represents a number from 0 to 0.75; and b and c each independently represent a number from 0.25 to 1.00.

<2> The polymer functional film according to <1>, wherein a represents a number from 0.01 to 0.75, and b and c each independently represent a number from 0.25 to 0.99.

<3> The polymer functional film according to <1> or <2>, wherein a represents a number from 0.01 to 0.67, and b and c each independently represent a number from 0.33 to 0.99.

<4> The polymer functional film according to any one of <1> to <3>, wherein a represents a number from 0.01 to 0.5, and b and c are each independently represent a number from 0.5 to 0.99.

<5> The polymer functional film according to any one of <1> to <4>, wherein the water content is from 25% by mass to 45% by mass.

<6> The polymer functional film according to any one of <1> to <5>, wherein the polymer functional film has a support.

<7> The polymer functional film according to <6>, wherein the support is a porous support.

<8> The polymer functional film according to <6> or <7>, wherein the support is a nonwoven fabric.

<9> The polymer functional film according to <7> or <8>, wherein a crosslinked material having a structure represented by Formula (I) is penetrated into the pores of the porous support.

<10> The polymer functional film according to any one of <1> to <9>, wherein the film thickness of the polymer functional film is from 30 $\mu$m to 200 $\mu$m.

<11> A method for producing a polymer functional film having a water content of from 20% by mass to 50% by mass, the method including: emitting ultraviolet radiation or an electron beam to a composition to polymerize the composition, in which the composition contains (A) a polymerizable compound represented by the following Formula (A), or a polymerizable compound represented by the following Formula (A) and (B) a monofunctional polymerizable compound represented by the following Formula (B), and also includes water:

Formula (A)

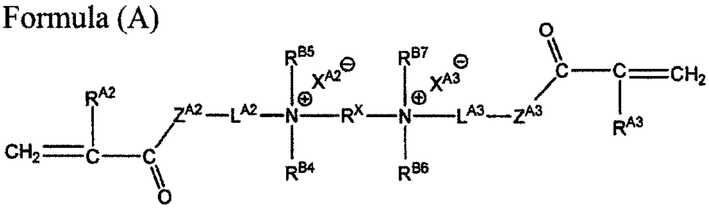

Formula (B)

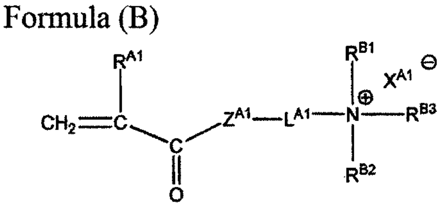

wherein in Formula (A) and Formula (B), $R^{A1}$ to $R^{A3}$ each independently represent a hydrogen atom or an alkyl group; $R^{B1}$ to $R^{B7}$ each independently represent an alkyl group or an aryl group; $Z^{A1}$ to $Z^{A3}$ each independently represent -O- or -NRa-, wherein Ra represents a hydrogen atom or an alkyl group; $L^{A1}$ to $L^{A3}$ each independently represent an alkylene group; $R^X$ represents an alkylene group, an alkenylene group, an alkynylene group, an arylene group, -O-, or a divalent linking group of a combination thereof; and $X^{A1}$ to $Z^{A3}$ each independently represent a halogen ion or an aliphatic or aromatic carboxylic acid ion.

<12> The method for producing a polymer functional film according to <11>, wherein the sum of the content of water is 10% by mass to 35% by mass with respect to the total mass of the composition.

<13> The method for producing a polymer functional film according to <11>, wherein the composition further contains an organic solvent, and the sum of the contents of water and the organic solvent is 10% by mass to 35% by mass with respect to the total mass of the composition.

Symbol "~" is used in the present specification to mean that the numerical values described before and after the symbol are included as the lower limit value and the upper limit value. Also, the term "dissociable group" refers to a group that is reversibly degradable into the component atoms, ions, atomic groups, and the like.

According to the invention, the description "(meth)acryl" denotes $-C(=O)CH=CH_2$ and/or $-C(=O)C(CH_3)=CH_2$, and "(meth)acrylamide" denotes acrylamide and/or methacrylamide, while "(meth)acrylate" denotes acrylate and/or methacrylate.

Furthermore, in regard to the various formulas, unless particularly stated otherwise, when there are plural groups under the same symbol, these groups may be identical with or different from each other. Similarly, when there are repetitions of plural partial structures, it is implied that these repetitions may be identical repetitions, or may be a mixture of different repetitions in a defined range.

In addition, in regard to geometric isomers which are substitution modes of double bonds in each formula, as a matter of convenience for indication, even if one of the isomers is described, the geometric isomer may be an E-form or a Z-form, or may be a mixture thereof, unless particularly stated otherwise.

According to the invention, a polymer functional film having excellent ability to control the coefficient of water permeability and excellent selective permeability for ions can be provided.

The above-described features and other features as well as advantages of the invention will be elucidated from the following description with appropriate reference to the attached drawing.

## BRIEF DESCRIPTION OF THE DRAWING

Fig. 1 is a diagram schematically illustrating the flow channel of an apparatus for measuring the coefficient of water permeability of a film.

## DESCRIPTION OF THE PREFERRED EMBODIMENTS

The polymer functional film of the invention can be used in order to perform ion exchange, reverse osmosis, forward osmosis, gas separation, and the like. Hereinafter, a preferred embodiment of the invention will be described by taking an example of a case in which the polymer functional film has a function as an ion exchange film.

«Polymer functional film»

The polymer functional film (hereinafter, also referred to simply as "film") of the invention has a structure represented by the following Formula (I):

Formula (I)

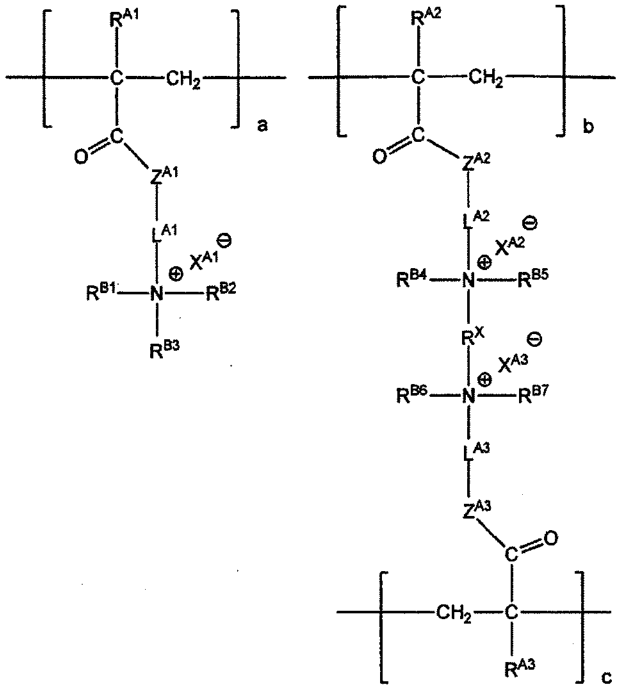

wherein in Formula (I), $R^{A1}$ to $R^{A3}$ each independently represent a hydrogen atom or an alkyl group; $R^{B1}$ to $R^{B7}$ each independently represent an alkyl group or an aryl group; $Z^{A1}$ to $Z^{A3}$ each independently represent -O- or -NRa-, wherein Ra represents a hydrogen atom or an alkyl group; $L^{A1}$ to $L^{A3}$ each independently represent an alkylene group; $R^X$ represents an alkylene group, an alkenylene group, an alkynylene group, an arylene group, -O-, or a divalent linking group of a combination thereof; $X^{A1}$ to $X^{A3}$ each independently represent a halogen ion or an aliphatic or aromatic carboxylic acid ion; a represents a number from 0 to 0.75; and b and c each independently represent a number from 0.25 to 1.00.

Here, the unit structure under the number a may be bonded to the unit structure under the number b, may be bonded to the unit structure under the number c, or may be bonded to both the unit structure under the number b and the unit structure under the number c. Furthermore, as long as the structure of Formula (I) includes the unit structure under the number a, the structure may also include a structure produced by combining the unit structure under the number b and the unit structure under the number c.

The alkyl group for $R^{A1}$ to $R^{A3}$ and Ra is a linear or branched alkyl group, and the number of carbon atoms thereof is preferably 1 to 12, more preferably 1 to 8, even more preferably 1 to 4, and particularly preferably 1.

Among others, each of $R^{A1}$ to $R^{A3}$ is preferably a hydrogen atom or a methyl group, and a hydrogen atom is most preferred.

Regarding Ra, between a hydrogen atom and an alkyl group, a hydrogen atom is preferred.

The alkyl group for $R^{A1}$ to $R^{A3}$ may have a substituent, and examples of the substituent include an alkyl group, an alkenyl group, an alkynyl group, a cycloalkyl group, an aryl group, a heterocyclic group, a halogen atom, a hydroxyl group, an alkoxy group, an aryloxy group, an alkylthio group, an arylthio group, an amino group (including an amino group, an alkylamino group, an arylamino group, and a heterocyclic amino group), an acylamino group, an alkyl- or aryl-sulfonamide group, an alkyl- or aryl-carbamoyl group, an alkyl- or aryl-sulfamoyl group, an alkyl- or aryl-sulfonyl group, an acyl group, an alkoxycarbonyl group, an aryloxycarbonyl group, a cyano group, a nitro group, an onio group (an ammonio group, a pyridinio group, a sulfonio group, or the like), a carboxyl group, and a sulfo group.

The alkyl group for $R^{B1}$ to $R^{B7}$ is a linear or branched alkyl group, and the number of carbon atoms thereof is preferably 1 to 9, more preferably 1 to 8, even more preferably 1 to 4, and particularly preferably 1.

Regarding the aryl group for $R^{B1}$ to $R^{B7}$, the number of carbon atoms is preferably 6 to 12, more preferably 6 to 9, and particularly preferably 6.

Among them, each of $R^{B1}$ to $R^{B7}$ is preferably an alkyl group.

The alkyl group and the aryl group for $R^{B1}$ to $R^{B7}$ may each have a substituent, and examples of the substituent include the substituents which may be carried by the alkyl group for $R^{A1}$ to $R^{A3}$.

The substituted alkyl group is preferably a benzyl group.

$Z^{A1}$ to $Z^{A3}$ each represent -O- or -NRa-, but -NRa- is preferred.

The alkylene group for $L^{A1}$ to $L^{A3}$ is a linear or branched alkylene group, and the number of carbon atoms thereof is preferably 1 to 9, more preferably 2 to 8, even more preferably 2 to 6, and particularly preferably 2 or 3. The alkylene group may have a substituent, and examples of the substituent include the substituents which may be carried by the alkyl group for $R^{A1}$ to $R^{A3}$. Among the substituents which may be carried by the alkylene group, a hydroxyl group is particularly preferred.

$R^X$ represents an alkylene group, an alkenylene group, an alkynylene group, an arylene group, -O-, or a divalent linking group of a combination thereof.

The alkylene group represents a linear or branched alkylene group, and the number of carbon atoms thereof is preferably 1 to 9. The alkenylene group and the alkynylene group are a linear or branched alkenylene group and alkynylene group, and the number of carbon atoms thereof is preferably 2 to 9.

For the arylene group, the number of carbon atoms is preferably 6 to 12, more preferably 6 to 8, and particularly preferably 6.

Regarding the divalent linking group combining an alkylene group, an alkenylene group, an alkynylene group, an arylene group and -O-, the number of combinations of these groups is preferably 2 to 4. For example, examples of a combination of two groups include a combination of an alkylene group and -O-, a combination of an alkylene group and an arylene group, and a combination of an arylene group and an arylene group.

The various groups for $R^X$ may each have a substituent, and examples of the substituent include the substituents which may be carried by the alkyl group for $R^{A1}$ to $R^{A3}$.

The group combining these groups is preferably -alkylene-phenylene-alkylene-.

Examples of the halogen ion for $X^{A1}$ to $X^{A3}$ include a chlorine ion, a bromine ion, and an iodine ion.

Examples of the aliphatic or aromatic carboxylic acid ion for $X^{A1}$ to $X^{A3}$ include formic acid ion, acetic acid ion, propionic acid ion, butanoic acid ion, and benzoic acid ion.

The aliphatic or aromatic carboxylic acid ion for $X^{A1}$ to $X^{A3}$ is preferably an aliphatic carboxylic acid, and particularly preferably acetic acid.

$X^{A1}$ to $X^{A3}$ are each preferably chlorine ion, bromine ion, iodine ion, or acetic acid ion.

a preferably represents a number from 0.01 to 0.75, more preferably represents a number from 0.01 to 0.67, and particularly preferably represents a number from 0.01 to 0.5.

b and c are each independently preferably represent a number from 0.25 to 0.99, more preferably represent a number from 0.33 to 0.99, and particularly preferably represent a number from 0.5 to 0.99.

Furthermore, the Formula (I) according to the invention may also contain other unit structures in addition to the unit as the unit structure of a and the unit as the unit structure of b.

The water content of the polymer functional film of the invention is in the range of from 20% by mass to 50% by mass, and the water content is more preferably from 25% by mass to 45% by mass.

The water content (mass%) according to the invention can be determined by the following formula.

$$\{(\text{Mass of film after overnight immersion in 0.5 M saline solution at 25°C}) - (\text{mass of film after drying of the film until any mass change is no longer detected})\} \div (\text{mass of film after drying of the film until any mass change is no longer detected}) \times 100$$

Here, the phrase "after overnight immersion" means "after the film has been caused to absorb a saline solution until saturation". According to the invention, it is desirable to immerse the film for at least 8 hours or longer.

The polymer functional film of the invention can use a support as a reinforcing material of the film, and preferably, the polymer functional film can use a porous support. When the composition for film formation that will be described below is allowed to enter the pores of this porous support, the polymer functional film can be configured to include the porous support as a part of the film. Examples of the porous support as a reinforcing material include a synthetic woven fabric or a synthetic nonwoven fabric, a sponge-like film, and a film having fine through-holes. Examples of the material that forms the porous support of the invention include polyethylene, polypropylene, polyacrylonitrile, polyvinyl chloride, polyester, polyamide, and copolymers thereof. Alternatively, for example, porous films based on polysulfone, polyether sulfone, polyphenylene sulfone, polyphenylene sulfide, polyimide, polyether imide, polyamide, polyamideimide, polyacrylonitrile, polycarbonate, polyacrylate, cellulose, cellulose acetate, polypropylene, poly(4-methyl-1-pentene), polyvinylidene fluoride, polytetrafluoroethylene, polyhexafluoropropylene, polychlorotrifluoroethylene, and copolymers thereof may also be used. Commercially available porous supports and reinforcing materials are commercially available from, for example, Freudenberg Filtration Technologies (Novatexx materials) and Sefar AG.

The thickness of the polymer functional film of the invention, in the case of having a support, the thickness including the support, is preferably 30 μm to 200 μm, more preferably 10 μm to 150 μm, and most preferably 30 μm to 130 μm.

The polymer functional film of the invention has an ion exchange capacity of preferably 0.5 meq/g or more, more preferably 0.8 meq/g or more, and particularly preferably 1.2 meq/g or more, based on the total dry mass of the film and the optional porous reinforcing material. There are no particular limitations on the upper limit of the ion exchange capacity, but an ion exchange capacity of 5.0 meq/g or less is practical.

Here, the unit meq stands for milliequivalents.

The selective permeability of the polymer functional film (anion exchange membrane) of the invention for anions such as $Cl^-$ is preferably more than 0.8, more preferably more than 0.85, particularly preferably more than 0.9, and most preferably more than 0.95.

The polymer functional film of the invention has an electrical resistance (film resistance) of preferably less than 10 $\Omega \cdot cm^2$, more preferably less than 8 $\Omega \cdot cm^2$, and particularly preferably less than 5 $\Omega \cdot cm^2$. A lower electrical resistance is more preferred, and it is preferable to have the lowest possible value in a practical range for the electrical resistance from the viewpoint of providing the effects of the invention. There are no particular limitations on the lower limit of the electrical resistance, but an electrical resistance of 0.5 $\Omega \cdot cm^2$ or higher is practical.

The swelling ratio in water of the polymer functional film of the invention is preferably less than 30%, more preferably less than 15%, and particularly preferably less than 8%. The swelling ratio can be controlled by selecting appropriate parameters in the stage of curing.

The electrical resistance, selective permeability, and swelling ratio % in water can be measured by the methods described in Membrane Science, 319, 217-218 (2008), and Masayuki Nakagaki, Maku-gaku Jikken Ho (Experimental Methods in Membranology), pp. 193-195 (1984).

The coefficient of water permeability of the polymer functional film of the invention is preferably $10 \times 10^{-5}$ $ml/m^2/Pa/hr$ or less, more preferably $6 \times 10^{-5}$ $ml/m^2/Pa/hr$ or less, and particularly preferably $4 \times 10^{-5}$ $ml/m^2/Pa/hr$ or less. There are no particular limitations on the lower limit of the coefficient of water permeability, but a coefficient of water permeability of 2.0 $ml/m^2/Pa/hr$ or more is practical.

«Method for producing polymer functional film»

The polymer functional film of the invention is produced by emitting ultraviolet radiation or an electron beam to a composition which contains (A) a polymerizable compound represented by the following Formula (A) as an essential component, or (A) a polymerizable compound represented by the following Formula (A) and (B) a monofunctional polymerizable compound represented by the following Formula (B) as essential components, and further contains, if necessary, (C) a monofunctional polymerizable compound other than the component (B), (D) a polymerization initiator, (E) a polymerization inhibitor, and (F) a solvent, and which includes water at a predetermined content, thereby polymerizing the composition. That is, when a composition containing these components is polymerized by emitting ultraviolet radiation or an electron beam thereto, the composition undergoes a curing reaction, and thus a film is formed.

Various components of the composition for producing the polymer functional film of the invention are described below.

<(A) Polyfunctional polymerizable compound>

The polyfunctional polymerizable compound of the invention is a polymerizable compound represented by the following Formula (A):

Formula (A)

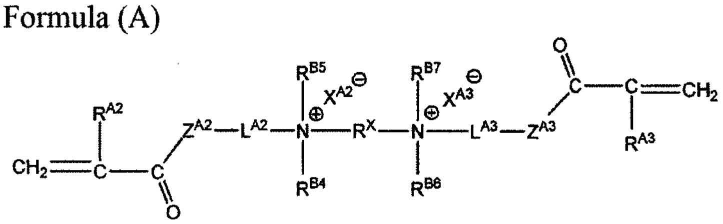

In Formula (A), $R^{A2}$ and $Z^{A3}$ each independently represent a hydrogen atom or an alkyl group; and $R^{B4}$ to $R^{B7}$

each independently represent an alkyl group or an aryl group. $Z^{A2}$ and $Z^{A3}$ each independently represent -O- or -NRa-, and here, Ra represents a hydrogen atom or an alkyl group. $L^{A2}$ and $Z^{A3}$ each independently represent an alkylene group; and $R^X$ represents an alkylene group, an alkenylene group, an alkynylene group, an arylene group, -O-, or a divalent linking group of a combination thereof. $X^{A2}$ and $X^{A3}$ each independently represent a halogen atom or an aliphatic or aromatic carboxylic acid ion.

Here, $R^{A2}$, $R^{A3}$, $R^{B4}$ to $R^{B7}$, $Z^{A2}$, $Z^{A3}$, $R^X$, and $X^{A2}$ to $X^{A3}$ respectively have the same meanings as those of $R^{A2}$, $R^{A3}$, $R^{B4}$ to $R^{B7}$, $Z^{A2}$, $Z^{A3}$, $R^X$, and $X^{A2}$ to $X^{A3}$ in the above Formula (I), and preferred ranges of these groups are also the same.

Specific examples of the polymerizable compound represented by Formula (A) are described below, but the invention is not intended to be limited to these.

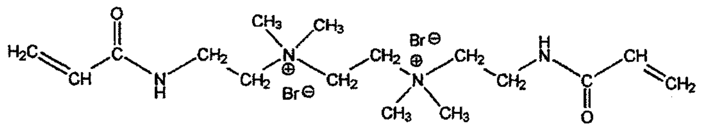

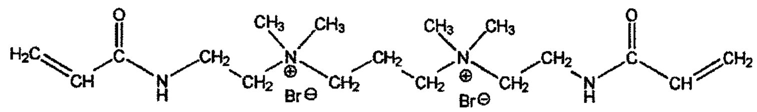

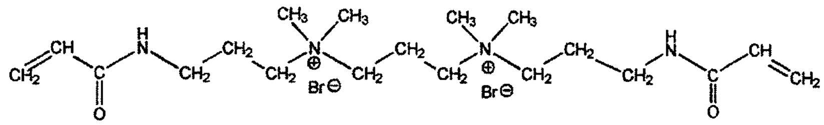

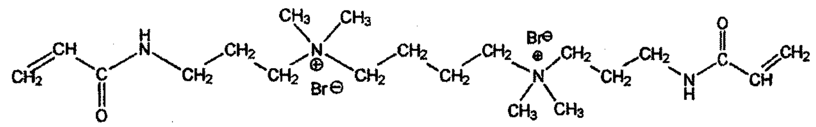

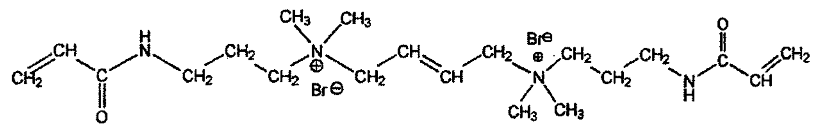

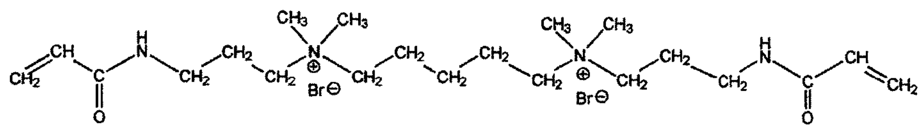

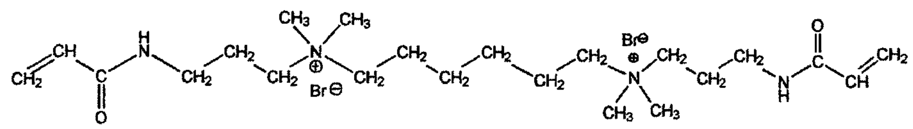

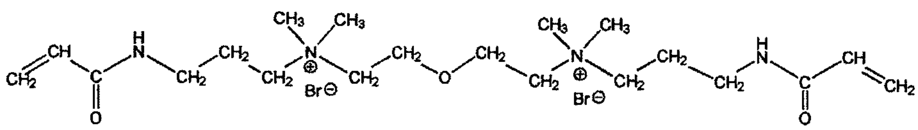

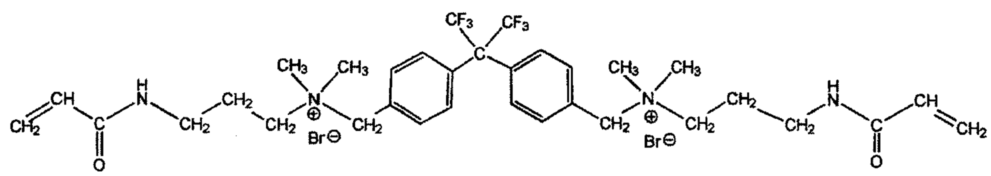

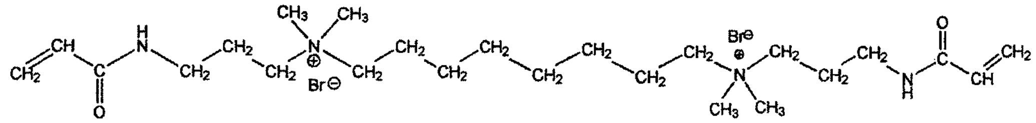

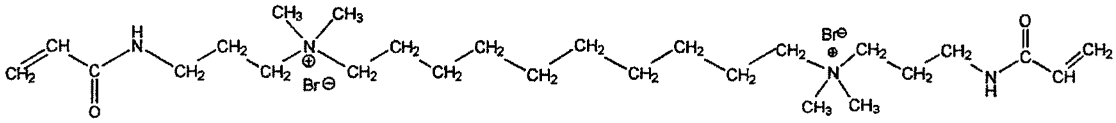

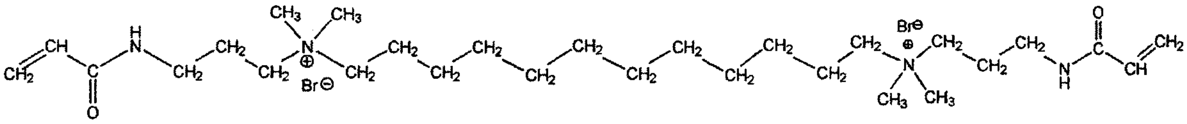

The compound represented by Formula (A) can be produced by allowing a compound represented by the following Formula (A-1) to react with a compound represented by the following Formula (A-2):

Formula (A-1)

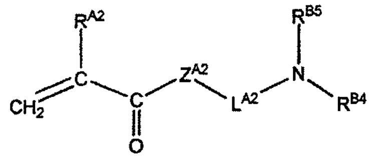

Formula (A-2) $X^{B1}\text{-}R^{X}\text{-}X^{B2}$

In regard to Formula (A-1), $R^{A2}$, $R^{B4}$, $R^{B5}$, $Z^{A2}$, and $L^{A2}$ respectively have the same meanings as those of $R^{A2}$, $R^{B4}$, $R^{B5}$, $Z^{A2}$, and $L^{A2}$ in the above Formula (I), and preferred ranges of these groups are also the same.

In regard to Formula (A-2), $R^X$ has the same meaning as $R^X$ in the above Formula (I), and a preferred range thereof is also the same. $X^{B1}$ and $X^{B2}$ each independently represent a halogen atom or an aliphatic or aromatic acyloxy group.

Here, $X^{B1}$ and $X^{B2}$ react with the compound represented by Formula (A-2) and then are released as anions, and thus constitute $X^{A2}$ and $X^{A3}$ in the above Formula (A).

<Monofunctional polymerizable compound>

A monofunctional polymerizable compound is used as the (B) monofunctional polymerizable compound represented by the following Formula (B), which is a raw material used to produce the polymerizable compound represented by the above Formula (I), and in addition to this, if necessary, as a monofunctional polymerizable compound other than the (C) monofunctional polymerizable compound for obtaining a unit structure of the third copolymerizable component.

According to the invention, particularly in order to impart functions to the polymer film and obtain a polymer functional film, it is preferable that the monofunctional polymerizable compound [the component (B) or/and the component (C)] has a polar substituent such as a dissociable group, an anion group, or a cation group as a partial structure or a substituent, and among them, the cation group is preferably an onio group (an ammonio group, a pyridinio group, a sulfonio group, or the like).

Therefore, the monofunctional polymerizable group represented by Formula (B), which is the component (B), has an ammonio group.

- (B) Monofunctional polymerizable compound represented by Formula (B) -

Formula (B)

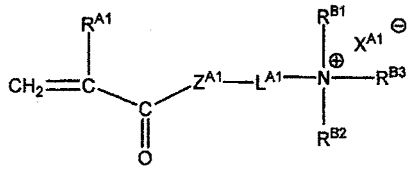

In Formula (B), $R^{A1}$ represents a hydrogen atom or an alkyl group; and $R^{B1}$ to $R^{B3}$ each independently represent an alkyl group or an aryl group. $Z^{A1}$ represents -O- or -NRa-, and here, Ra represents a hydrogen atom or an alkyl group. $L^{A1}$ represents an alkylene group. $X^{A1}$ represents a halogen ion or an aliphatic or aromatic carboxylic acid ion.

Here, $R^{A1}$, $R^{B1}$ to $R^{B3}$, $Z^{A1}$, $L^{A1}$ and $X^{A1}$ respectively have the same meanings as those of $R^{A1}$, $R^{B1}$ to $R^{B3}$, $Z^{A1}$, $L^{A1}$ and $X^{A1}$ in the above Formula (I), and preferred ranges of these groups are also the same.

Specific examples of the monofunctional polymerizable compound represented by Formula (B) are described below, but the invention is not intended to be limited to these.

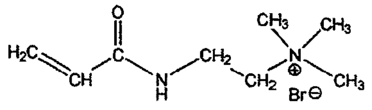
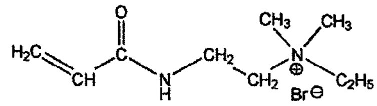

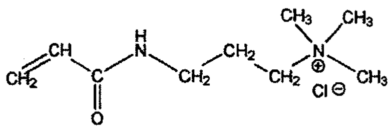
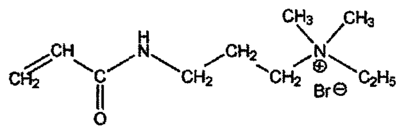

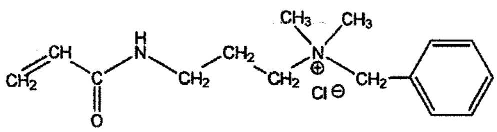
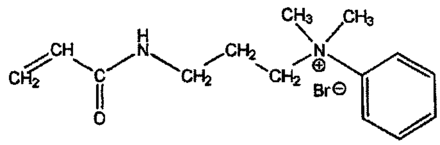

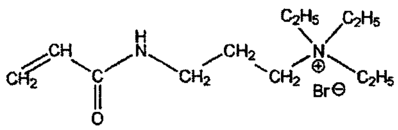
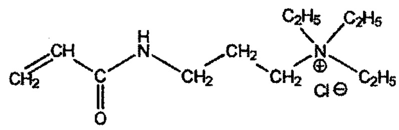

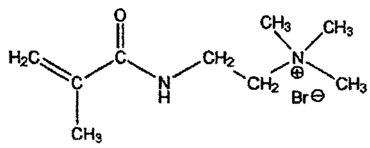
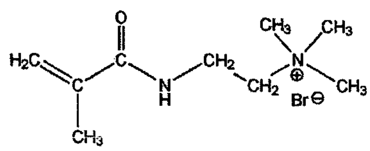

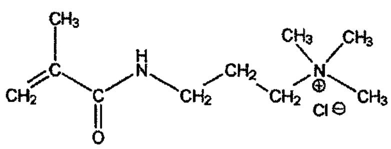
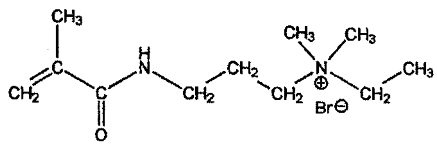

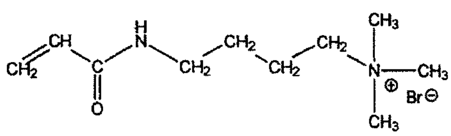
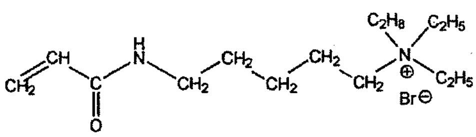

In 100% by mole of the total amount of the polymerizable compound represented by Formula (A) of the component (A) and the monofunctional polymerizable compound represented by Formula (B) of the component (B), the proportion of the molar content of the polymerizable compound represented by Formula (A) of the component (A) is preferably 25% by mole to 100% by mole, more preferably 33% by mole to 99% by mole, and particularly preferably 50% by mole to 99% by mole.
Furthermore, the proportion of the polymerizable compound represented by Formula (A) of the component (A) with respect to the total solid content mass of the composition of the invention is preferably 30% by mass to 100% by mass, more preferably 40% by mass to 90% by mass, and particularly preferably 50% by mass to 80% by mass.
When the proportion of the polymerizable compound is in the preferred range described above, the desired curability, pH-resistance, mechanical strength, and flexibility are excellent.

- (C) Other monofunctional polymerizable compound -

The composition of the invention may include a third monofunctional polymerizable compound, in addition to the polymerizable compound represented by Formula (A) of the component (A) and the monofunctional polymerizable compound represented by Formula (B) of the component (B).
Examples of the monofunctional polymerizable compound other than the monofunctional polymerizable compound represented by Formula (B) include a (meth)acrylate compound, a (meth)acrylamide compound, a vinyl ether compound, an aromatic vinyl compound, an N-vinyl compound (polymerizable monomer having an amide bond), and an allyl compound.
Among these, from the viewpoints of the stability and pH-resistance of the functional polymer film thus obtained, a compound which does not have an ester bond, a (meth)acrylamide compound, a vinyl ether compound, an aromatic vinyl compound, an N-vinyl compound (polymerizable monomer having an amide bond), or an allyl compound is preferred, and a (meth)acrylamide compound is particularly preferred.
Examples of the monofunctional polymerizable compound include the compounds described in JP2008-208190A and JP2008-266561 A.
It is preferable that these monofunctional polymerizable compounds have dissociable groups as will be described below, in view of imparting functions to the polymer film.
For example, regarding a (meth)acrylate compound, a compound having a substituent (preferred examples of the substituent include the substituents described below) at the alcohol moiety of the ester is preferred, and a compound having a dissociable group at the alkyl moiety of the alcohol is particularly preferred.
Preferred examples of the (C) other monofunctional polymerizable compound include a compound represented by the following Formula (C):

Formula (C)

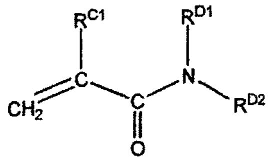

wherein in Formula (C), $R^{C1}$ represents a hydrogen atom or a methyl group; $R^{D1}$ represents a hydrogen atom or an alkyl group; $R^{D2}$ represents an alkyl group; and $R^{D1}$ and $R^{D2}$ may be bonded to each other and form a ring.
$R^{C1}$ is preferably a hydrogen atom.
The alkyl group for $R^{D1}$ and $R^{D2}$ is a linear or branched alkyl group, and the number of carbon atoms thereof is preferably 1 to 18, more preferably 1 to 12, and even more preferably 1 to 6. Examples thereof include methyl, ethyl, n-propyl, isopropyl, n-butyl, t-butyl, n-pentyl, n-hexyl, n-octyl, t-octyl, n-decyl, and n-octadecyl.
The alkyl group for $R^{D1}$ and $R^{D2}$ may have a substituent, and examples of the substituent include the substituents which may be carried by the alkyl group for $R^{A1}$ to $R^{A3}$.
When the alkyl group for $R^{D1}$ and $R^{D2}$ has a substituent, the number of carbon atoms of the alkyl group moiety is preferably 1 to 6, and more preferably 1 to 3.
The ring formed by bonding of $R^{D1}$ and $R^{D2}$ is preferably a 5-membered ring or a 6-membered ring, and preferred examples thereof include a pyrrolidine ring, a piperazine ring, a piperidine ring, a morpholine ring, and a thiomorpholine ring.
Furthermore, one of $R^{D1}$ and $R^{D2}$ is preferably a hydrogen atom or a methyl group, and particularly preferably a hydrogen atom.
According to the invention, it is preferable that the component (C) has a dissociable group, a cation group, an

anion group, or a polar substituent as the substituent of the alkyl group for $R^{D1}$ or $R^{D2}$, in order to impart function to the polymer film.

Among the cation groups, according to the present invention, an onio group (an ammonio group, a pyridinio group, a sulfonio group or the like) is preferred similarly to the component (B), and an onio group represented by the following formula (ON) or (OS) is more preferred.

However, in the case of an onium group represented by the following formula (ON), the onium group is not intended to be a compound included in the above Formula (C).

Formula (ON)

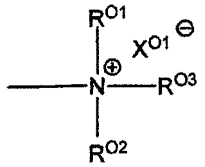

Formula (OS)

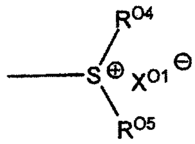

In Formulas (ON) and (OS), $R^{O1}$ to $R^{O5}$ each independently represent an alkyl group or an aryl group. Here, at least two of $R^{O1}$ to $R^{O3}$, or $R^{O4}$ and $R^{O5}$ may be bonded to each other and form a ring. $X^{O1-}$ represents an anion.

The number of carbon atoms of the alkyl group for $R^{O1}$ to $R^{O5}$ is preferably 1 to 18, more preferably 1 to 12, and even more preferably 1 to 6. The alkyl group may have a substituent, and examples of the substituent include the substituents which may be carried by the alkyl group for $R^{A1}$ to $R^{A3}$.

Regarding the substituent that substitutes the alkyl group for $R^{O1}$ to $R^{O5}$, among others, an aryl group is preferred. An alkyl group substituted with such an aryl group is preferably a benzyl group.

The number of carbon atoms of the aryl group for $R^{O1}$ to $R^{O5}$ is preferably 6 to 18, and more preferably 6 to 12.

The aryl group for $R^{O1}$ to $R^{O5}$ may have a substituent, and examples of the substituent include the substituents which may be carried by the alkyl group for $R^{A1}$ to $R^{A3}$.

The ring formed by the bonding of any two of $R^{O1}$ to $R^{O5}$ that are bonded to a same atom is preferably a 5-membered ring or a 6-membered ring.

Such a ring is preferably a nitrogen-containing aromatic ring in Formula (ON), and among others, a pyridine ring is preferred.

Examples of the anion of $X^{O1}$ include a halogen ion, a carboxylic acid ion (for example, acetic acid ion or benzoic acid ion), sulfuric acid ion, an organic sulfuric acid ion (for example, methanesulfonic acid ion, benzenesulfonic acid ion, or p-toluenesulfonic acid ion), and $OH^-$.

Examples of the group represented by Formula (ON) include trimethylammonio, triethylammonio, tributylammonio, dimethylbenzylammonio, dimethylphenylammonio, dimethylcetylammonio, and pyridinio.

Examples of the group represented by Formula (OS) include dimethylsulfonio, methylbenzylsulfonio, and methylphenylsulfonio.

Among the groups represented by Formula (ON) or (OS), those groups represented by Formula (ON) are preferred.

Among the substituents which may be carried by the alkyl group for $R^{O1}$ to $R^{O5}$, in addition to the onio groups described above, polar groups are preferred, and an acyl group and an amino group are more preferred, while an amino group is particularly preferred. The amino group is preferably a tertiary amino group, and a group represented by the following Formula (N) is preferred:

Formula (N)

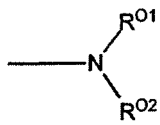

In regard to Formula (N), $R^{O1}$ and $R^{O2}$ respectively have the same meanings as $R^{O1}$ and $R^{O2}$ for the above Formula (ON), and preferred ranges thereof are also the same.

Examples of the group represented by Formula (N) include dimethylamino and diethylamino.

Monofunctional polymerizable compounds having the (meth)acrylamide structure represented by Formula (C) are described below; however, the invention is not intended to be limited to these.

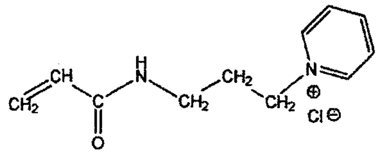

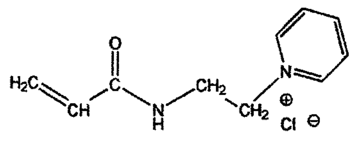

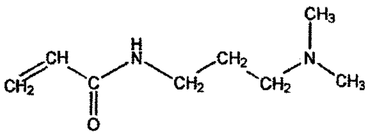

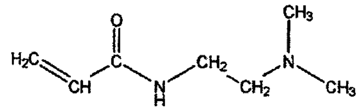

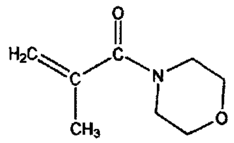

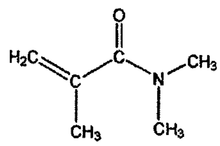

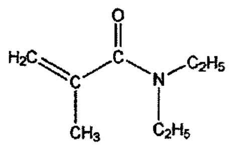

The monofunctional polymerizable compounds of the component (B) or the component (C) are commercially available from Kohjin Co., Ltd., Kyowa Hakko Chemical Co., Ltd., Fluka Chemical Corp., Sigma-Aldrich Co., LLC, and Toagosei Co., Ltd., or can be easily synthesized by known methods.

(D) Polymerization initiator

The composition of the invention preferably includes a polymerization initiator.

Among the polymerization initiators, according to the invention, a photopolymerization initiator which is capable of performing polymerization by emission of energy radiation is preferred.

Examples of the photopolymerization initiator include an aromatic ketone, an acylphosphine compound, an aromatic onium salt compound, an organified oxide, a thio compound, a hexaarylbiimidazole compound, a keto oxime ester compound, a borate compound, an azinium compound, a metallocene compound, an active ester compound, a compound having a carbon-halogen bond, and an alkylamine compound.

Preferred examples of the aromatic ketone, acylphosphine oxide compound, and thio compound include the compounds having a benzophenone skeleton or a thioxanthone skeleton described in "RADIATION CURING IN POLYMER SCIENCE AND TECHNOLOGY", pp. 77-117 (1993). More preferred examples include the α-thiobenzophenone compounds described in JP1972-6416B (JP-S47-6416B); the benzoin ether compounds described in JP1972-3981B (JP-S47-3981B); the α-substituted benzoin compounds described in JP1972-22326B (JP-S47-22326B); the benzoin derivatives described in JP1972-23664B (JP-S47-23664B); the aroyl phosphonic acid esters described in JP1982-30704A (JP-S57-30704A); the dialkoxybenzophenones described in JP1985-26483B (JP-S60-26483B); the benzoin ethers described in JP1985-26403B (JP-S60-26403B) and JP1987-81345A (JP-S62-81345A); the α-aminobenzophenones described in JP1989-34242B (JP-H01-34242B), US4318791B, and EP0284561A; p-di(dimethylaminobenzoyl)benzene described in JP1990-211452A (JP-H02-211452A); the thio-substituted aromatic ketones described in JP1986-194062A (JP-S61-194062A); the acylphosphine sulfides described in JP1990-9597B (JP-H02-9597B); the acylphosphines described in JP1990-9596B (JP-H02-9596B); the thioxanthones described in JP1988-61950B (JP-S63-61950B); and the coumarines described in JP1984-42864B (JP-S59-42864B). Furthermore, the polymerization initiators described in JP2008-105379A and JP2009-114290A are also preferred. Further examples include the polymerization initiators described in Kiyoshi Kato, "Shigaisen Koka Shisutemu (UV Curing System)" (published by Sogo Gijutsu Senta Co., Ltd.; 1989), pp. 65-148.

According to the invention, a water-soluble polymerization initiator is preferred.

Here, when it is said that a polymerization initiator is water-soluble, it implies that the polymerization initiator dissolves in distilled water at 25°C in an amount of 0.1% by mass or more. It is more preferable that the water-soluble photopolymerization initiator dissolves in distilled water at 25°C in an amount of 1% by mass or more, and particularly preferably in an amount of 3% by mass or more.

Among these, a photopolymerization initiator suitable for the composition of the invention is an aromatic ketone (particularly, an α-hydroxy-substituted benzoin compound) or an acylphosphine oxide compound. Particularly, preferred examples include p-phenylbenzophenone (manufactured by Wako Pure Chemical Industries, Ltd.), bis(2,4,6-trimethylbenzoyl)phenylphosphine oxide (IRGACURE 819, manufactured by BASF Japan, Ltd.), 2,4,6-trimethylbenzoyldiphenylphosphine oxide (DAROCUR TOP, manufactured by BASF Japan, Ltd.), 2-benzyl-2-dimethylamino-1-(4-morpholinophenyl)-butanone-1 (IRGACURE 369, manufactured by BASF Japan, Ltd.), 2-methyl-1-(4-methylthiophenyl)-2-morpholinopropan-1-one (IRGACURE 907, manufactured by BASF Japan, Ltd.), 1-[4-(2-hydroxyethoxy)phenyl]-2-hydroxy-2-methyl-1-propan-1-one (IRGACURE 2959, manufactured by BASF Japan, Ltd.), and 2-hydroxy-2-methyl-1-phenylpropan-1-one (DAROCUR 1173, manufactured by BASF Japan, Ltd.), and from the viewpoints of water-solubility and resistance to hydrolysis, IRGACURE 2959 (manufactured by BASF Japan, Ltd.) and DAROCUR 1173 (manufactured by BASF Japan, Ltd.) are most preferred.
According to the invention, the content of the polymerization initiator is preferably 0.1 parts by mass to 10 parts by mass, more preferably 0.1 parts by mass to 5 parts by mass, and even more preferably 0.3 parts by mass to 2 parts by mass, with respect to 100 parts by mass of the total solid content mass of the composition.

(E) Polymerization inhibitor

According to the invention, it is also preferable for the composition to include a polymerization inhibitor.
Regarding the polymerization inhibitor, any known polymerization inhibitor can be used, and examples thereof include a phenol compound, a hydroquinone compound, an amine compound, and a mercapto compound.
Specific examples of the phenol compound include hindered phenol (a phenol having a t-butyl group at the ortho-position, and a representative example is 2,6-di-t-butyl-4-methylphenol), and bisphenols. Specific examples of the hydroquinone compound include monomethyl ether hydroquinone. Furthermore, specific examples of the amine compound include N-nitroso-N-phenylhydroxylamine and N,N-diethylhydroxylamine.
Meanwhile, these polymerization inhibitors may be used singly, or in combination of two or more kinds thereof
The content of the polymerization inhibitor is preferably 0.01 parts by mass to 5 parts by mass, more preferably 0.01 parts by mass to 1 parts by mass, and even more preferably 0.01 parts by mass to 0.5 parts by mass, with respect to 100 parts by mass of the total solid content mass of the composition.

(F) Solvent

The composition of the invention may include (F) a solvent. The content of the (F) solvent in the composition is preferably 5% by mass to 35% by mass, more preferably 10% by mass to 35% by mass, and even more preferably 10% by mass to 27% by mass, with respect to the total amount of the composition.
When the composition includes a solvent, the curing (polymerization) reaction proceeds uniformly and smoothly. Also, in a case in which the porous support is impregnated with the composition, impregnation proceeds smoothly.
For the (F) solvent, water, or a mixed liquid of water and a solvent having a solubility in water of 5% by mass or more is preferably used, and it is also preferable that the solvent is freely miscible with water. Therefore, a solvent selected from water and a water-soluble solvent is preferred.
Particularly preferred examples of the water-soluble solvent include an alcohol-based solvent, and aprotic polar solvents such as an ether-based solvent, an amide-based solvent, a ketone-based solvent, a sulfoxide-based solvent, a sulfone-based solvent, a nitrile-based solvent, and an organic phosphorus-based solvent.
Examples of the alcohol-based solvent include methanol, ethanol, isopropanol, n-butanol, ethylene glycol, propylene glycol, diethylene glycol, and dipropylene glycol. These can be used singly or in combination of two or more kinds thereof.
Furthermore, preferred examples of the aprotic polar solvent include dimethyl sulfoxide, dimethylimidazolidinone, sulfolane, N-methylpyrrolidone, dimethylformamide, acetonitrile, acetone, dioxane, tetramethylurea, hexamethylphosphoramide, hexamethylphosphorous triamide, pyridine, propionitrile, butanone, cyclohexanone, tetrahydrofuran, tetrahydropyran, ethylene glycol diacetate, and γ-butyrolactone. Among these, dimethyl sulfoxide, N-methylpyrrolidone, dimethylformamide, dimethylimidazolidinone, sulfolane, acetone or acetonitrile, and tetrahydrofuran are preferred. These can be used singly or in combination of two or more kinds thereof.
If necessary, the composition may also include, for example, a surfactant, a thickening agent, a surface tension adjusting agent, and a preservative.
Next, the various steps of the method for producing a polymer functional film of the invention are described.
The polymer functional film of the invention can be produced using a provisional support (peeled off from the film after completion of the curing reaction); however, it is preferable to use a support (integrated as a part of the polymer functional film). The polymer functional film can be produced in a batch mode using a fixed support; however, the film can also be produced in a continuous mode using a moving support.

In regard to the provisional support, it is not necessary to consider material transfer, and for example, metal plates such as an aluminum plate are included. Any support may be used as long as the support can be fixed for the purpose of film formation.

The composition can be applied on a porous support layer by any suitable method, for example, curtain coating, extrusion coating, air knife coating, slide coating, nip roll coating, forward roll coating, reverse roll coating, immersion coating, kiss coating, rod bar coating, or spray coating. Coating of multiple layers can be carried out simultaneously or continuously. For the simultaneous coating of multiple layers, curtain coating, slide coating, slot die coating and extrusion coating are preferred.

Therefore, in a preferred method, the composition of the invention is applied continuously on a moving support, and more preferably by means of a production unit which includes the composition coating unit, a radiation source for curing the composition, a film collecting unit, and a means for moving the support from the composition coating unit to the radiation source and the film collecting unit.

In the present Production Example, the polymer functional film of the invention is produced through the operations of (i) applying a curable composition on a support, and (ii) subjecting the composition to a curing reaction by light irradiation.

The curable composition coating unit can be placed at a position upstream of the radiation source, and the radiation source is placed at a position upstream of the composite film collecting unit.

In order for the composition of the invention to have sufficient fluidity to be applied by a high speed coating machine, the viscosity of the composition of the invention at 35°C is preferably less than 4000 mPa.s, more preferably 1 mPa.s to 1000 mPa.s, and most preferably 1 mPa.s to 500 mPa.s. In the case of a coating method such as slide bead coating, the viscosity at 35°C is preferably 1 mPa.s to 200 mPa.s.

When an adequate coating technology is used, the composition of the invention can be applied on a moving support at a speed of more than 15 m/min, for example, at a speed of more than 20 m/min. Alternatively, the speed can even achieve a higher speed, for example, 60 m/min, 120 m/min, or 400 m/min at the maximum.

Particularly, in the case of using a support in order to increase the mechanical strength of the ion exchange film, for example, it is preferable to apply the composition of the invention on a support that has been subjected to a corona discharge treatment, a glow discharge treatment, a flame treatment, an ultraviolet irradiation treatment or the like in order to improve wettability and adhesive force of the support.

During the curing reaction, the polymerizable compound represented by Formula (A) of the component (A) and the monofunctional polymerizable compound represented by Formula (B) of the component (B) are polymerized and form a polymer. In the curing reaction, it is preferable that light irradiation is carried out under the conditions capable of forming an ion exchange film within 30 seconds.

In regard to the curing reaction for the composition of the invention, after the composition is applied on the support, the curing reaction is initiated preferably within 60 seconds, more preferably within 15 seconds, particularly preferably within 5 seconds, and most preferably within 3 seconds.

The curing reaction is carried out by emitting light to a paste-like mixture over a time period of preferably less than 10 seconds, more preferably less than 5 seconds, particularly preferably less than 3 seconds, and most preferably less than 2 seconds. In a continuous method, light irradiation is continuously carried out, and the curing reaction time is determined based on the rate at which the composition moves while passing under the irradiated beam.

In a case in which UV light (ultraviolet radiation) of high intensity is used in the curing reaction, there is a possibility that a significant amount of heat may be generated. Thus, in order to prevent overheating, cooling air may be used for the lamp and/or the support/film. There are occasions in which a noticeable dose of IR radiation is emitted together with a UV beam, and in this case, it is preferable to emit UV light through a filter of IR-reflective quartz plate.

It is preferable to use ultraviolet radiation for curing. Adequate wavelengths are, for example, UV-A (400 nm to > 320 nm), UV-B (320 nm to > 280 nm), and UV-C (280 nm to 200 nm), under the conditions in which the absorption wavelength of any photoinitiator included in the composition and the wavelength are considered suitable.

Suitable examples of the ultraviolet radiation source include a mercury arc lamp, a carbon arc lamp, a lower pressure mercury lamp, a medium pressure mercury lamp, a high pressure mercury lamp, a swirl-flow plasma arc lamp, a metal halide lamp, a xenon lamp, a tungsten lamp, a halogen lamp, a laser, and an ultraviolet light emitting diode. A medium pressure or high pressure mercury vapor type ultraviolet light emitting lamp is particularly preferred. In addition to this, in order to modify the light emission spectrum of the lamp, additives such as a metal halide may be incorporated. A lamp having the maximum emission at 200 nm to 450 nm is particularly suitable.

The energy output of the radiation source is preferably 20 W/cm to 1,000 W/cm, and more preferably 40 W/cm to 500 W/cm; however, the energy output may be higher than this range or lower than this range as long as a desired exposure dose can be realized. The degree of hardness of an ion exchange membrane can be adjusted by modifying the exposure intensity. The exposure dose is measured by a High Energy UV Radiometer (UV Power Puck™ from EIT Instrument Markets, Inc.), in the UV-A range indicated by the relevant apparatus, and the exposure dose is preferably at least 40 $mJ/cm^2$, more preferably 40 $mJ/cm^2$ to 2,000 $mJ/cm^2$, and most preferably 70 $mJ/cm^2$ to 1,000 $mJ/cm^2$. The

exposure time can be freely selected; however, a shorter exposure time is preferred, and the exposure time is typically less than 2 seconds.

When a porous support is used, as the composition is impregnated and then is subjected to a curing reaction, a crosslinked material having a structure represented by the above Formula (I) is penetrated into the pores, and thereby the porous support can constitute a part of the film.

In the case of a fast coating speed, it is preferable to use plural emission of light sources in order to achieve a desired dose. The amounts of light or intensities of these light sources may be identical or different.

The polymer functional film of the invention contains a monofunctional polymerizable compound represented by Formula (B) of the component (B), particularly preferably a polymerizable compound having a dissociable group, in addition to the polyfunctional polymerizable compound represented by Formula (A) of the component (A). As the relevant monofunctional polymerizable compound is used in combination, the polymer functional film of the invention can have excellent selective permeability and pH-resistance, and has excellent capability of suppressing the coefficient of water permeability. The mechanism for this is not sufficiently understood; however, it is speculated that since the crosslinked portion is three-dimensionally crosslinked, the polymer network becomes compact, and as a result, the coefficient of water permeability of the cured film is suppressed.

The polymer functional film of the invention is primarily intended to be used particularly for ion exchange. However, the polymer functional film of the invention is not intended to be limited to ion exchange, and it is considered that the polymer functional film can also be suitably used for reverse osmosis and gas separation.

## Examples

Hereinafter, the invention will be described in more detail by way of Examples, but the invention is not intended to be limited to these Examples. Meanwhile, unless particularly stated otherwise, units "parts" and "percent (%)" are on a mass basis.

[Synthesis of polymerizable compounds 1 to 5 represented by Formula (A) (hereinafter, respectively indicated as Polymerizable Compounds 1, 2, 3, 4 and 5)]

- Synthesis of Polymerizable Compound 1 -

313 g of N-[3-(dimethylaminopropyl)acrylamide] (2.00 mol, manufactured by Tokyo Chemical Industry Co., Ltd.) was added to a mixed solution of 175 g of para-dichloroxylene (1.00 mol, manufactured by Tokyo Chemical Industry Co., Ltd.), 1,220 g of acetonitrile, 244 g of methanol, and 1 g of tert-butyl hydroperoxide (manufactured by Tokyo Chemical Industry Co., Ltd.), and the mixture was heated and stirred for 2 hours at 50°C. Subsequently, 1,220 g of acetone was added thereto, and the mixture was stirred for 1 hour at room temperature. Crystals thus generated were filtered, and thus 450 g (yield 92%) of white crystals of Polymerizable Compound 1 were obtained. The reaction scheme is shown below.

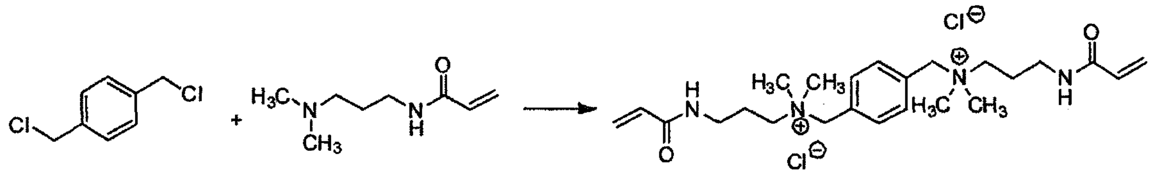

- Synthesis of Polymerizable Compound 2 -

82.0 g of N-[3-(dimethylaminopropyl)acrylamide] (0.525 mol, manufactured by Tokyo Chemical Industry Co., Ltd.) was added to a mixed solution of 66.0 g of para-dibromoxylene (0.250 mol, manufactured by Sigma-Aldrich Co., LLC), 592 g of acetone, 148 g of methanol, and 0.44 g of para-methoxyphenol (manufactured by Tokyo Chemical Industry Co., Ltd.), and the mixture was heated and stirred for 2 hours at 50°C. Subsequently, 1,184 g of acetone was added thereto, and the mixture was stirred for 1 hour at 0°C. Crystals thus generated were filtered, and thus 120 g (yield 83%) of white crystals of Polymerizable Compound 2 were obtained. The reaction scheme is shown below.

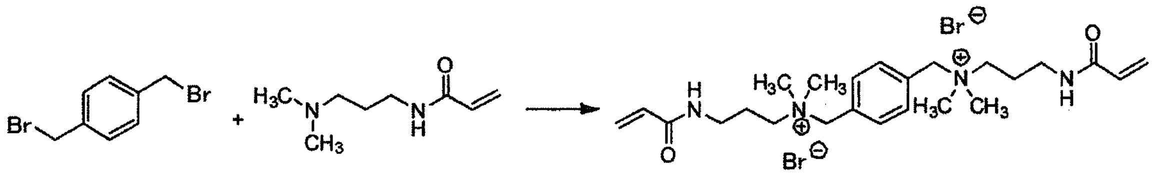

- Synthesis of Polymerizable Compound 3 -

17.6 g of N-[3-(dimethylaminopropyl)acrylamide] (2.25 mol, manufactured by Tokyo Chemical Industry Co., Ltd.) was added to a mixed solution of 12.2 g of 1,6-dibromohexane (50.0 mmol, manufactured by Tokyo Chemical Industry Co., Ltd.), 12.0 g of methanol, 12.0 g of acetonitrile, and 0.1 g of methylhydroquinone (manufactured by Tokyo Chemical Industry Co., Ltd.), and the mixture was stirred for 72 hours at room temperature. Subsequently, 100 g of acetone was added thereto, and the mixture was stirred for 1 hour at 0°C. Crystals thus generated were filtered, and 21 g (yield 75%) of white crystals of Polymerizable Compound 3 were obtained. The reaction scheme is shown below.

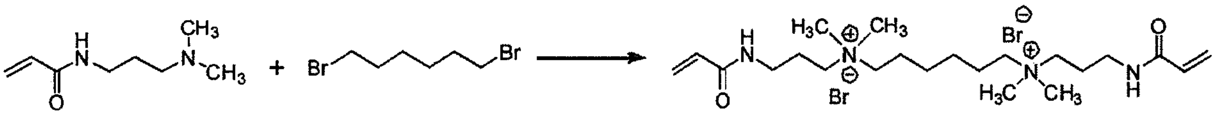

- Synthesis of Polymerizable Compound 4 -

427 g of N-[3-(dimethylamino)propyl]acrylamide (2.73 mol, manufactured by Wako Pure Chemical Industries, Ltd.) was added to a mixed solution of 165 g of 1,4-dichlorobutane (1.30 mol, manufactured by Wako Pure Chemical Industries, Ltd.), 5.92 g of methoxyphenol (manufactured by Wako Pure Chemical Industries, Ltd.), 444 ml of nitrobenzene, and 444 ml of ethanol, and the mixture was heated and stirred for 19 hours at 80°C. Subsequently, 400 ml of acetone was added thereto, and crystals thus generated were filtered and then washed with acetone. Thus, 490 g (water content 5%, yield 82%) of white crystals of Polymerizable Compound 4 were obtained. The reaction scheme is shown below.

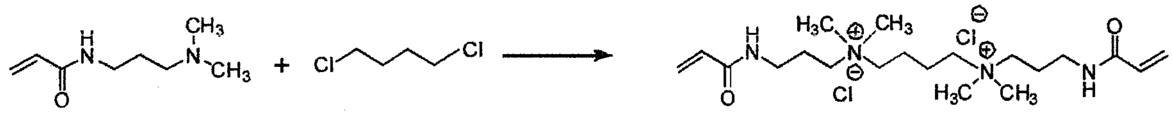

- Synthesis of Polymerizable Compound 5 -

125 g of N-[3-(dimethylamino)propyl]acrylamide (0.80 mol, manufactured by Wako Pure Chemical Industries, Ltd.) was added to a mixed solution of 80.8 g of 1,3-dibromopropane (0.40 mol, manufactured by Wako Pure Chemical Industries, Ltd.), 0.617 g of methoxyphenol (manufactured by Wako Pure Chemical Industries, Ltd.), 309 ml of acetonitrile, and 103 ml of methanol, and the mixture was heated and stirred for 7 hours at 50°C. Subsequently, 2.2 L of acetone was added thereto, and the supernatant was removed by decantation. Then, 0.1 g of methoxyphenol and 30 g of water were added thereto, and the mixture was concentrated for 30 minutes at 35°C and 40 mmHg. Thus, 188 g of a 81% solution of Polymerizable Compound 5 (water content 19%, yield 74%) was obtained. The reaction scheme is shown below.

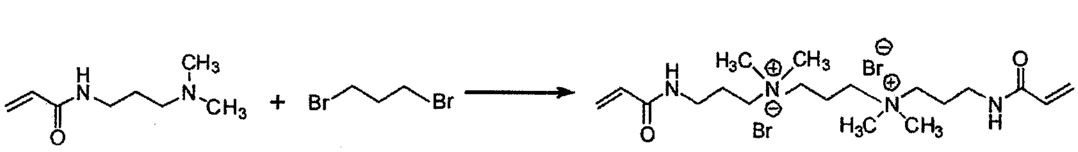

(Production of anion exchange film)

A coating liquid having the composition shown in the following Table 1 was applied manually on an aluminum plate using a rod wound with a wire having a diameter of 150 μm, at a speed of about 5 m/min. Subsequently, a nonwoven fabric (FO-2223-10 manufactured by Freudenberg Group, thickness 100 μm) was put on to impregnate the coating liquid. Any excess coating liquid was removed using a rod that was not wound with a wire. The temperature of the coating

liquid at the time of application was about 50°C. The coating liquid-impregnated support was subjected to a curing reaction using a UV exposure machine (manufactured by Fusion UV Systems, Inc., type Light Manner LH10, D-valve, rate 15 m/min, 100% intensity), and thereby an anion exchange membrane was produced. The curing time was 0.8 seconds. The exposure time was 0.47 seconds. The film thus obtained was removed from the aluminum plate, and was stored in a 0.1 M NaCl solution for at least 12 hours.

(Examples 2 to 10)

In regard to the production of the anion exchange membrane of Example 1, anion exchange membranes of Examples 2 to 10 were produced in the same manner as in Example 1, except that the respective compositions were changed to the compositions described in the following Table 1.

(Comparative Example 1)

An anion exchange membrane of Comparative Example 1 was produced in the same manner as in Example 1, except that reference was made to WO2013/011273A, and in regard to production of the anion exchange membrane of Example 1, the composition was changed to the composition described in the following Table 1.

[Table 1]

| | Example 1 | Example 2 | Example 3 | Example 4 | Example 5 | Example 6 | Example 7 | Example 8 | Example 9 | Example 10 | Comparative Example 1 |
|---|---|---|---|---|---|---|---|---|---|---|---|
| | Mass | Mass | Mass | Mass | Mass | Mass | Mass | Mass | Mass | Mass | Mass |
| Pure water | 20.20 | 10.30 | 20.20 | 20.20 | 25.25 | 25.25 | 20.20 | 24.34 | 26.66 | 10.53 | 32.00 |
| MEHQ | 0.08 | 0.08 | 0.08 | 0.08 | 0.08 | 0.08 | 0.08 | 0.085 | 0.084 | 0.084 | 0.05 |
| DMAPAA-Q | 13.51 | 1.87 | 1.87 | 13.51 | 13.51 | 13.51 | 13.51 | 21.03 | 13.33 | 4.14 | |
| Isopropyl alcohol | 5.05 | | | 5.05 | | | 5.05 | | | | |
| Polymerizable Compound 1 | 59.89 | 86.48 | 76.58 | 59.89 | 59.89 | 59.89 | | | | | |
| Polymerizable Compound 2 | | | | | | | | | | | 67.50 |
| Polymerizable Compound 3 | | | | | | | 59.89 | | | | |
| Polymerizable Compound 4 | | | | | | | | 53.28 | 58.66 | | |
| Polymerizable Compound 5 | | | | | | | | | | 84.00 | |
| Darocur 1173 | 0.42 | 0.42 | 0.42 | | | 0.42 | 0.42 | 0.43 | 0.43 | 0.45 | 0.45 |
| Tego Glide 432 | 0.84 | 0.84 | 0.84 | 0.84 | 0.84 | 0.84 | 0.84 | 0.85 | 0.84 | 0.79 | |
| Irgacure 2959 | | | | 0.42 | 0.42 | | | | | | |

[Description of abbreviations in Table 1]

MEHQ: Monomethyl ether hydroquinone
DMAPAA-Q: Dimethylaminopropylacrylamide methyl quaternium chloride (3-acrylamideopropyltrimethylammonium chloride)
Darocur 1173: trade name, manufactured by Ciba Specialty Chemicals Corp.
Tego Glide 432: trade name, manufactured by Evonik Industries AG
Irgacure 2959: trade name, manufactured by BASF Japan, Ltd.

For the anion exchange membranes produced in Examples 1 to 10 and Comparative Example 1, the items described below were evaluated. The results thus obtained are summarized in the following Table 2.

[Film thickness]

The film thickness of a film after storage for at least 12 hours in a 0.1 M NaCl solution was measured with a film thickness gauge.

[Water content]

The water content (mass%) was measured by the following procedure. A film was cut out to a specimen that measured 5 cm on each side, and the mass (W1) of the specimen after overnight immersion in a 0.5 M saline solution was measured. The specimen was dried for at least 12 hours in an oven under reduced pressure at 60°C and 10 mmHg or less, the specimen was removed from the oven, and then the mass (W2) of the specimen was measured immediately. The water content was measured by {(W1) - (W2)} ÷ (W2) × 100.

[Selective permeability (transport number)]

Selective permeability was calculated by measuring the film potential (V) by a static film potential analysis. Two electrolytic cells (cells) were separated apart by a film to be analyzed. Before measurement, the film had been equilibrated for about 16 hours in a 0.05 M aqueous solution of NaCl. Thereafter, aqueous solutions of NaCl of different concentrations were respectively poured into the electrolytic cells that were on the opposite sides with respect to the film to be analyzed.
100 mL of a 0.05 M aqueous solution of NaCl was poured into one of the cells. 100 mL of a 0.5 M aqueous solution of NaCl was poured into the other cell.
After the temperatures of the aqueous solutions of NaCl in the cells were stabilized to 25°C by a constant temperature water bath, the two electrolytic cells and a Ag/AgCl reference electrode (manufactured by Metrohm AG) were connected by salt bridges, while the two liquids were caused to flow toward the film surface, and the film potential (V) was measured. Thus, selective permeability t was calculated by the following Formula (II).
The affective area of the film was 1 $cm^2$.

$$t = (a' + b')2b' \qquad \text{Formula (II)}$$

The details of the respective symbols in the above Formula (II) are described below.

a': Film potential (V)
b': 0.5915log(flc1//f2c2) (V)
f1, f2: Activity coefficients ofNaCl in the two cells
c1, c2: NaCl concentrations (M) in the two cells

[Coefficient of water permeability (ml/$m^2$/Pa/hr)]

The coefficient of water permeability of the film was measured using an apparatus having a flow channel 10 as illustrated in Fig. 1. In Fig. 1, reference numeral 1 represents a film, and reference numerals 3 and 4 represent the flow channels for a feed solution (pure water) and a draw solution (3M NaCl), respectively. The arrow of reference numeral 2 represents the flow of water separated from the feed solution.

400 mL of a feed solution and 400 mL of a draw solution were brought into contact via a film (film contact area 18 $cm^2$), and the respective liquids were caused to flow in the direction of the arrow of reference numeral 5 at a flow rate of 8 cm/second using a peristaltic pump. The rate at which water in the feed solution infiltrated into the draw solution through the film was analyzed by measuring the masses of the feed solution and the draw solution in real time, and thus the coefficient of water permeability was determined.

[Salt leak rate (permeation rate of NaCl) (mmol/$m^2$/Pa/hr)]

In the method for measuring the coefficient of water permeability, the electrical conductivity of the feed solution after the measurement was measured, and the concentration of NaCl was calculated. From this NaCl concentration, the salt leak rate (permeation rate of NaCl) was calculated.
The salt leak rate is defined as a value obtained by converting the amount (number of moles) of NaCl calculated from electrical conductivity to a relative value per unit time, per unit area, per unit osmotic pressure.

[Method for electrodialysis evaluation]

An electrodialysis evaluation was carried out using a cartridge holder capable of fixing a cartridge for microacilyzer S1, "AC-220" (trade name, manufactured by Astom Corp.). For the electrodes, titanium with a platinum plating with a thickness of 0.2 μm was used as an anode, and platinum was used as a cathode.
An ion exchange member to be evaluated, which had been sufficiently immersed in a 0.5 M aqueous solution of NaCl at a temperature of 25°C, was laminated alternately in order of a cation exchange member (CMX manufactured by Astom Corp. was used) and an anion exchange membrane (each of the films produced in Examples and Comparative Examples was used) from the anode side, with a spacer interposed therebetween. Thus, two sheets each of a cation exchange membrane and an anion exchange membrane were accommodated in a cartridge.
The cartridge was installed and fixed in the cartridge holder. 50 mL of a 0.5 M aqueous solution of sodium sulfate was used as an electrode liquid, 20 mL each of a 0.6 M aqueous solution of sodium chloride was used as the liquids on the concentration side and the dilution side for electrodialysis, and an electrodialysis treatment was carried out while each of the liquids was circulated at a flow rate of 6 mL/min. Regarding the treatment current, the voltage was controlled so as to obtain a constant current of 100 mA. Electrodialysis was carried out for a predetermined time (83 minutes), and the solution conductivity (mS/cm) on the dilution side was measured with a conductivity meter. The solution conductivity was defined as the value for electrodialysis evaluation. 32

[Table 2]

| | Example 1 | Example 2 | Example 3 | Example 4 | Example 5 | Example 6 | Example 7 | Example 8 | Example 9 | Example 10 | Comparative Example 1 |
|---|---|---|---|---|---|---|---|---|---|---|---|
| Film thickness (μm) | 125 | 128 | 125 | 124 | 125 | 126 | 124 | 120 | 119 | 125 | 124 |
| Water content (mass%) | 45 | 38 | 42 | 45 | 45 | 45 | 45 | 48 | 46 | 42 | 52 |
| Transport number | 0.94 | 0.95 | 0.95 | 0.94 | 0.94 | 0.94 | 0.94 | 0.95 | 0.95 | 0.96 | 0.95 |
| Coefficient of water permeability (ml/$m^2$/hr/Pa)×10 5 | 5.6 | 4.9 | 4.8 | 5.5 | 5.4 | 5.5 | 5.8 | 7.7 | 7.5 | 5.9 | 9.3 |
| Salt leak rate (mmol/$m^2$/hr/Pa)x $10^5$ | 1.6 | 1.4 | 1.4 | 1.6 | 1.6 | 1.5 | 1.6 | 2.1 | 2.0 | 1.7 | 3.0 |
| Electrical conductivity of diluted solution after electrodialysis (mS/cm) | 5.0 | 4.8 | 4.8 | 5.0 | 5.0 | 5.0 | 5.0 | 5.9 | 5.9 | 5.0 | 10.0 |

As is obvious from Table 2, the anion exchange membranes of Examples 1 to 10 that contained a compound having a structure represented by Formula (I) of the invention and had a water content of from 20% by mass to 50% by mass, exhibited satisfactory results for both selective permeability and the coefficient of water permeability. On the contrary, the anion exchange membrane of Comparative Example that was produced at a conventionally known composition and had a water content of more than 50% by mass, had poor coefficient of water permeability compared with the anion exchange membranes of Examples 1 to 10.

Furthermore, as is obvious from Table 2, the salt leak rates of the anion exchange membranes of Examples 1 to 10 and the electrical conductivity of the diluted solution after electrodialysis exhibited lower values than those of the anion exchange membrane of Comparative Example. Therefore, it is understood that an ion exchange apparatus using an anion exchange membrane of the invention can suppress the electric power consumption to a lower level than an ion exchange apparatus using a conventional ion exchange membrane.

Furthermore, in a hydroxy ion conductive membrane for alkaline fuel cells, if the permeability of water (coefficient of water permeability) is large, the power generation efficiency is decreased. As described above, the ion exchange membrane of the invention has a lower coefficient of water permeability than conventional ion exchange membranes, and therefore, the ion exchange membrane of the invention can also be suitably used as an ion conductive membrane for fuel cell applications.

The invention has been described together with embodiments thereof; however, it is not intended to limit the description of the invention in any specific parts unless particularly stated otherwise, and it is contemplated that the invention and the embodiments should be construed broadly without contradicting the spirit and scope of the invention disclosed in the attached claims.

## Claims

1. A polymer functional film having a structure represented by the following Formula (I) and having a water content of from 20% by mass to 50% by mass:

Formula (I)

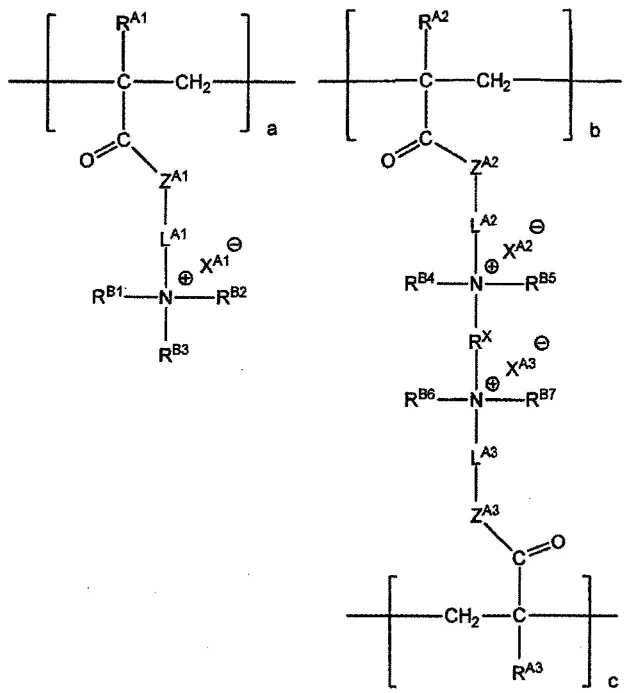

wherein in Formula (I), $R^{A1}$ to $R^{A3}$ each independently represent a hydrogen atom or an alkyl group; $R^{B1}$ to $R^{B7}$ each independently represent an alkyl group or an aryl group; $Z^{A1}$ to $Z^{A3}$ each independently represent -O- or -NRa-, wherein Ra represents a hydrogen atom or an alkyl group; $L^{A1}$ to $L^{A3}$ each independently represent an alkylene group; $R^X$ represents an alkylene group, an alkenylene group, an alkynylene group, an arylene group, -O-, or a divalent linking group of a combination thereof; $X^{A1}$ to $X^{A3}$ each independently represent a halogen ion or an aliphatic

or aromatic carboxylic acid ion; a represents a number from 0 to 0.75; and b and c each independently represent a number from 0.25 to 1.00.

**2.** The polymer functional film according to claim 1, wherein a represents a number from 0.01 to 0.75, and b and c each independently represent a number from 0.25 to 0.99.

**3.** The polymer functional film according to claim 1 or 2, wherein a represents a number from 0.01 to 0.67, and b and c each independently represent a number from 0.33 to 0.99.

**4.** The polymer functional film according to any one of claims 1 to 3, wherein a represents a number from 0.01 to 0.5, and b and c are each independently represent a number from 0.5 to 0.99.

**5.** The polymer functional film according to any one of claims 1 to 4, wherein the water content is from 25% by mass to 45% by mass.

**6.** The polymer functional film according to any one of claims 1 to 5, wherein the polymer functional film has a support.

**7.** The polymer functional film according to claim 6, wherein the support is a porous support.

**8.** The polymer functional film according to claim 6 or 7, wherein the support is a nonwoven fabric.

**9.** The polymer functional film according to claim 7 or 8, wherein a crosslinked material having the structure represented by Formula (I) is penetrated into the pores of the porous support.

**10.** The polymer functional film according to any one of claims 1 to 9, wherein the film thickness of the polymer functional film is from 30 $\mu$m to 200 $\mu$m.

**11.** A method for producing a polymer functional film having a water content of from 20% by mass to 50% by mass, the method comprising:

emitting ultraviolet radiation or an electron beam to a composition to polymerize the composition, wherein the composition contains (A) a polymerizable compound represented by the following Formula (A), or a polymerizable compound represented by the following Formula (A) and (B) a monofunctional polymerizable compound represented by the following Formula (B), and water:

Formula (A)

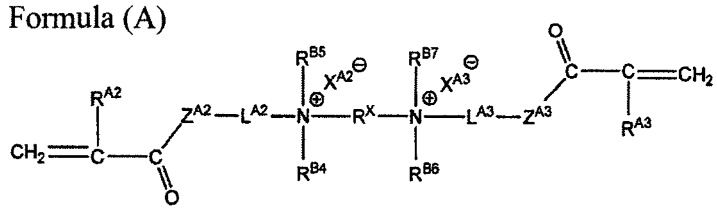

Formula (B)

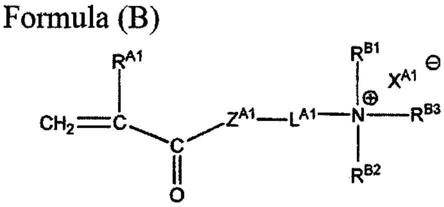

wherein in Formulas (A) and (B), $R^{A1}$ to $R^{A3}$ each independently represent a hydrogen atom or an alkyl group; $R^{B1}$ to $R^{B7}$ each independently represent an alkyl group or an aryl group; $Z^{A1}$ to $Z^{A3}$ each independently represent -O- or -NRa-, wherein Ra represents a hydrogen atom or an alkyl group; $L^{A1}$ to $L^{A3}$ each independently represent an alkylene group; $R^X$ represents an alkylene group, an alkenylene group, an alkynylene group, an arylene group, -O-, or a divalent linking group of a combination thereof; and $X^{A1}$ to $X^{A3}$ each independently represent a halogen ion or an aliphatic or aromatic carboxylic acid ion.

**12.** The method for producing a polymer functional film according to claim 11, wherein the total content of water is 10% by mass to 35% by mass with respect to the total mass of the composition.

**13.** The method for producing a polymer functional film according to claim 11, wherein the composition further includes an organic solvent, and the sum of the contents of water and the organic solvent is 10% by mass to 35% by mass with respect to the total mass of the composition.

FIG. 1

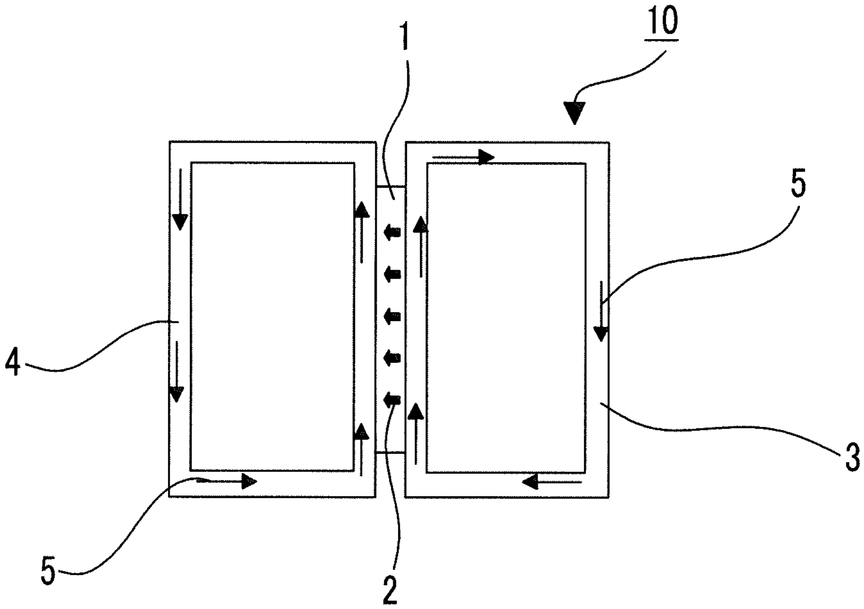

## INTERNATIONAL SEARCH REPORT

International application No.
PCT/JP2014/052295

A. CLASSIFICATION OF SUBJECT MATTER
*C08J5/22*(2006.01)i, *C08F220/60*(2006.01)i

According to International Patent Classification (IPC) or to both national classification and IPC

B. FIELDS SEARCHED

Minimum documentation searched (classification system followed by classification symbols)
C08J5/00-5/24, C08F12/00-34/04

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)
CAplus(STN), REGISTRY(STN)

C. DOCUMENTS CONSIDERED TO BE RELEVANT

| Category* | Citation of document, with indication, where appropriate, of the relevant passages | Relevant to claim No. |
|---|---|---|
| X | US 5118717 A (Russell B. Hodgdon), 02 June 1992 (02.06.1992), claims 1 to 4; example 6 (Family: none) | 1-13 |
| A | JP 2000-43398 A (Toppan Printing Co., Ltd.), 15 February 2000 (15.02.2000), claims 1 to 11; paragraph [0037] (Family: none) | 1-13 |
| A | JP 2002-515930 A (Aventis Research & Technologies GmbH & Co. KG.), 28 May 2002 (28.05.2002), claims 1 to 16; specification, page 52, example 12c & WO 1998/036002 A1 & DE 19705963 A | 1-13 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 15 April, 2014 (15.04.14) | 22 April, 2014 (22.04.14) |
| Name and mailing address of the ISA/ Japanese Patent Office | Authorized officer |
| Facsimile No. | Telephone No. |

Form PCT/ISA/210 (second sheet) (July 2009)

INTERNATIONAL SEARCH REPORT

International application No.
PCT/JP2014/052295

C (Continuation). DOCUMENTS CONSIDERED TO BE RELEVANT

| Category* | Citation of document, with indication, where appropriate, of the relevant passages | Relevant to claim No. |
|---|---|---|
| A | JP 2004-301766 A (TDK Corp.), 28 October 2004 (28.10.2004), claims 1 to 19 (Family: none) | 1-13 |
| A | JP 9-203810 A (Konica Corp.), 05 August 1997 (05.08.1997), claims 1 to 18; paragraph [0134] & US 6068794 A | 1-13 |
| A | JP 2006-185744 A (Sumitomo Bakelite Co., Ltd.), 13 July 2006 (13.07.2006), claims 1 to 23; paragraph [0096] (Family: none) | 1-13 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*


### Patent documents cited in the description

- WO 2011073637 A
- WO 2011073638 A
- WO 2011025867 A
- WO 2013011273 A
- JP 2008208190 A
- JP 2008266561 A
- JP 47006416 B
- JP S476416 B
- JP 47003981 B
- JP S473981 B
- JP 47022326 B
- JP S4722326 B
- JP 47023664 B
- JP S4723664 B
- JP 57030704 A
- JP S5730704 A
- JP 60026483 B
- JP 60026403 B
- JP S6026403 B
- JP 62081345 A
- JP S6281345 A
- JP 1034242 B
- JP H0134242 B
- US 4318791 B
- EP 0284561 A
- JP 2211452 A
- JP H02211452 A
- JP 61194062 A
- JP S61194062 A
- JP 2009597 B
- JP H029597 B
- JP 2009596 B
- JP H029596 B
- JP 63061950 B
- JP S6361950 B
- JP 59042864 B
- JP S5942864 B
- JP 2008105379 A
- JP 2009114290 A

### Non-patent literature cited in the description

- *Membrane Science,* 2008, vol. 319, 217-218
- **MASAYUKI NAKAGAKI.** *Maku-gaku Jikken Ho,* 1984, 193-195
- *RADIATION CURING IN POLYMER SCIENCE AND TECHNOLOGY,* 1993, 77-117
- **KIYOSHI KATO.** Shigaisen Koka Shisutemu. Sogo Gijutsu Senta Co., Ltd, 1989, 65-148